# EUROPÄISCHE PATENTSCHRIFT

(11) **EP 3 993 621 B1**
(45) Veröffentlichungstag und Bekanntmachung des Hinweises auf die Patenterteilung: **12.04.2023**
(21) Anmeldenummer: 20740514.3
(22) Anmeldetag: 02.07.2020
(51) Int. Cl.: A01K 61/59, A01K 61/90

(54) **LANDBASIERTE AQUAKULTURANLAGE ZUR PRODUKTION VON WASSERTIEREN UND ANWENDUNG DER ANLAGE**
LAND BASED AQUACULTURE FACILITY FOR THE PRODUCTION OF AQUATIC ANIMALS AND USE OF THE FACILITY
INSTALLATION D'AQUACULTURE TERRESTRE POUR LA PRODUCTION D'ANIMAUX AQUATIQUES ET UTILISATION DE L'INSTALLATION

(30) Priorität: 04.07.2019 DE 102019118034
(43) Veröffentlichungstag der Anmeldung: 11.05.2022
(73) Patentinhaber: Alfred-Wegener-Institut Helmholtz-Zentrum für Polar- und Meeresforschung, 27570 Bremerhaven (DE)
(72) Erfinder: ALBERTS-HUBATSCH, Hilke, 27570 Bremerhaven (DE); BEERMANN, Jan, 27570 Bremerhaven (DE); HALFER, Jörn, 27570 Bremerhaven (DE); LORKOWSKI, Kai, 27570 Bremerhaven (DE)
(86) Internationale Anmeldenummer: PCT/DE2020/100582
(87) Internationale Veröffentlichungsnummer: WO 2021/000999

(56) Entgegenhaltungen:
- DE-A1- 10 055 005
- JP-A- 2005 151 961

## Beschreibung

Die Erfindung bezieht sich auf eine landbasierte Aquakulturanlage zur Produktion von Wassertieren mit zumindest zwei Wasserbehältern, von denen zumindest einer eine Überlaufvorrichtung mit einem ersten Trenngitter mit vorgegebener Maschenweite aufweist, wobei mittels zumindest einer Pumpe über zumindest eine Zulaufvorrichtung in den Wasserbehälter mit der Überlaufvorrichtung eine geschlossene Umlaufströmung in den Wasserbehältern erzeugbar ist und über die Überlaufvorrichtung Krebstiere mit einer unterhalb der Maschenweite liegenden Größe selektierbar sind, und auf eine Anwendung einer solchen landbasierten Aquakulturanlage.

Landbasierte Aquakulturanlagen sind unabhängig von wechselnden Umweltbedingungen. Alle Umweltparameter können gesteuert und damit der Zielart der Aquakulturanlage individuell angepasst werden. Durch Berücksichtigung der speziellen Ansprüche der Wassertiere an biotische Faktoren (Nahrung, Luftzufuhr etc.) und abiotische Faktoren (Temperatur, Salinität, Licht, Strömung, Habitat etc.) können Systeme entwickelt werden, die den Tieren ein möglichst natürliches Verhalten ermöglichen und damit gute Reproduktions- und Wachstumsraten erzielen. Zur Produktion von Salzwassertieren wird künstliches Seewasser eingesetzt. Desweiteren sind landbasierte Aquakulturanlagen besser zugänglich als seebasierte Aquakulturanlagen. Kleinere Wassertiere können gut als Futtermittel für größere Wassertiere kultiviert werden. Amphipoden oder Flohkrebse sind eine Ordnung der Krebstiere, die zur Klasse der höheren Krebse gehört. Die kleinen Krebstierchen sind in allen Weltmeeren heimisch. Gammariden sind eine Unterordnung der Flohkrebse und stellen mit ca. 4000 Arten die zweitgrößte Gruppe der rund 9500 bekannten Flohkrebsarten dar. Gammariden sind weltweit in allen Gewässerzonen verbreitet und leben sowohl in Süß- als auch in Salzwasser. Gammariden als besonders geeignetes Futtermittel für die Kultivierung von Wassertieren konnten bislang zufriedenstellend nur im Labormaßstab produziert werden.

In der modernen Aquakultur werden traditionell Futtermittel verwendet, die einen großen Anteil an Fischmehl und Fischöl haben. Da Fischmehl und Fischöl meist nicht allein aus Abfallprodukten der Fischindustrie gewonnen werden, sondern aus eigens hierfür eingesetzter Fischerei auf Kleinfische, setzt dies die Bestände dieser Fische durch Überfischung stark unter Druck. Für eine nachhaltigere Produktion von Futtermitteln in der Aquakultur werden inzwischen vermehrt pflanzliche Bestandteile eingesetzt (z.B. Soja oder Lupinen), welche jedoch oft ein mangelhaftes Profil an essenziellen Fettsäuren aufweisen. Die Supplementierung von Futtermitteln mit essenziellen Fettsäuren erfolgt hier auch wieder über herkömmliche Derivate tierischen Ursprungs. Im Bereich der Futtermittelforschung wurden bisher wenige Alternativen zur Gewinnung von wertvollen Lipiden erarbeitet. Lohnende Organismen sind hier Tangflohkrebse der Arten *Gammarus locusta* und *Echinogammarus marinus,* die in ihrer natürlichen Verbreitung u.a. in der Nordsee vorkommen und deren kommerzielle Produktion und Anwendung vielversprechend ist.

### Stand der Technik

Der der Erfindung nächstliegende Stand der Technik wird in der JP 2005 151 961 A offenbart. Beschrieben wird eine landbasierte Aquakulturanlage zur Klassifizierung von Wassertieren. Die bekannte Aquakulturanlage weist zwei Wasserbehälter auf, von denen der eine Wasserbehälter (Zuchtbehälter) eine Überlaufvorrichtung aufweist, die sich nahezu über seine gesamte Höhe erstreckt und trichterförmig zuläuft. In die Behälterwandung ist ein erstes Trenngitter mit bekannter Maschenweite integriert. Die Überlaufvorrichtung mündet im oberen Bereich des zweiten Wasserbehälters (Selektionsbehälter). Über eine Pumpe zwischen den Wasserbehältern ist Wasser über eine Zulaufvorrichtung in den Wasserbehälter mit der Überlaufvorrichtung pumpbar, wobei der zweite Wasserbehälter in seinem unteren Bereich eine trichterförmige Ablaufvorrichtung aufweist, die ebenfalls mit einem Trenngitter bekannter Maschenweite abgedeckt ist. In den beiden Wasserbehältern entsteht im Pumpenbetrieb eine geschlossene Umlaufströmung. Dadurch werden die Wassertiere im ersten Wasserbehälter (Zuchtbehälter) mit einer Größe, die kleiner ist als die Maschenweite des ersten Trenngitters, in die Überlaufvorrichtung gespült und im oberen Bereich in den zweiten Wasserbehälter (Selektionsbehälter) überführt und dadurch selektiert. Das Wasser strömt pumpengetrieben über die trichterförmige Ablaufvorrichtung wieder zurück in den ersten Wasserbehälter. Dabei muss das zweite Trenngitter eine geringere Maschenweite als das erste aufweisen, damit die selektierten Wassertiere nicht wieder zurück in den ersten Wasserbehälter gespült werden. Bei dieser bekannten Aquakulturanlage stehen die beiden Wasserbehälter in direktem funktionalem Zusammenhang miteinander, sodass die Anlage nicht ohne weiteres erweiterbar ist.

Aus der **Diplomarbeit** "Zucht von Gammarus locusta als Futterergänzung in der Aquakultur" von Anke Tarja Heiermann (Carl von Ossietzky Universität Oldenburg 20.09.2006, Kapitel 5.4.1 - Aufbau) ist eine landbasierte Aquakulturanlage zur Kultivierung von Amphipoden, insbesondere Gammariden, bekannt, die mit einem einzelnen Wasserbehälter arbeitet. Der Wasserbehälter besitzt in seinem oberen Bereich eine Überlaufvorrichtung, über die das Wasser in ein Rücklaufbecken (Pumpensumpf) gelangt. Aus dem Rücklaufbecken ist das Wasser dann mittels einer Pumpe über eine Zulaufvorrichtung wieder in den Wasserbehälter zurückpumpbar, sodass im Pumpenbetrieb eine geschlossene Umlaufströmung erzeugbar ist. Im Wasserbehälter befindet sich ein erstes Trenngitter mit bekannter Maschenweite, das der freiwilligen Größentrennung der Gammariden dienen soll, wobei diese sich aber gleichmäßig im gesamten Wasserbecken bewegen und nicht deutlich trennen. Das Gitter mit adulten Gammariden, die größer als die Maschenweite sind, wird zur Selektion manuell aus dem Wasserbehälter entnommen, die verbliebenen juvenilen Gammariden werden dann manuell durch Ausgießen des Wassers aus dem Wasserbehälter über ein zweites Trenngitter mit kleinerer Maschenweite gewonnen. Desweiteren sind im Behälter ein Substrat als Habitat und eine Luftzufuhr angeordnet. Der Wasserbehälter ist mit einem Deckel verschließbar. Eine Erweiterung der Anlage erfolgt durch Vorsehen einer Vielzahl von Wasserbehältern, die von einfachen Wassereimern (Fassungsvermögen 15 l) gebildet werden.

Aus der US 2018/0177162 A1 ist für die Kultivierung von Muscheln eine landbasierte Aquakulturanlage mit geschlossener Umlaufströmung bekannt, bei der in einem ersten Wasserbehälter die Muscheln aufgezogen und das Wasser in einem zweitem Wasserbehälter biologisch gereinigt (Bindung von Feststoffen, Denitrifikation) wird. Die Muscheln verbleiben immer im ersten Wasserbehälter. Der Wasserumlauf wird durch Einblasen von Luft erzeugt. Der erste Wasserbehälter weist eine Überlaufvorrichtung in den zweiten Wasserbehälter auf. Der zweite Wasserbehälter weist an seinem unteren Ende eine Sedimentkammer und einen Ablasshahn auf. Schließlich ist es aus der DE 20 2017 003 465 U1 bekannt, eine landgestützte Aquakulturanlage zur Aufzucht von Garnelen vorzusehen, bei der in einem einzigen Wasserbehälter eine Kreiselströmung erzeugt wird. Zur Verbesserung des Habitats sind übereinander installierte Flächen vorgesehen, auf denen sich die Garnelen absetzen können.

### Aufgabenstellung

Ausgehend von dem nächstliegenden Stand der Technik ist die **Aufgabe** für die vorliegende Erfindung darin zu sehen, die eingangs beschriebene gattungsgemäße landgestützte Aquakulturanlage so weiterzubilden, dass eine kommerziell verwertbare Produktion der zu kultivierenden Wassertiere zuverlässig möglich ist. Insbesondere soll eine Größenselektion der Wassertiere, speziell auch im Hinblick auf die kommerzielle Gammaridenzucht als Futtermittel, einfach durchführbar sein. Die Jungtiere sollen von der Elternpopulation stressfrei getrennt werden, um für eine maximale Biomasseproduktion in eine neue Kohorte überführt zu werden (Alterskohortentrennung). Die erfindungsgemäße **Lösung** für diese Aufgabe ist dem Anspruch 1 zu entnehmen. Vorteilhafte Weiterbildungen der Erfindung werden in den Unteransprüchen aufgezeigt und im Folgenden im Zusammenhang mit der Erfindung näher erläutert.

Die beanspruchte landgestützte Aquakultur ist erfindungsgemäß dadurch gekennzeichnet, dass zumindest auch der zweite Wasserbehälter eine Überlaufvorrichtung aufweist, wobei jede Überlaufvorrichtung im oberen Bereich des jeweiligen Wasserbehälters angeordnet ist, und zwischen den zumindest beiden Wasserbehältern zumindest ein zentraler Sammelbehälter mit einem oberen Zulaufbereich und einem unteren Ablaufbereich angeordnet ist, wobei in den oberen Zulaufbereich die Überlaufvorrichtungen der zumindest beiden Wasserbehälter münden und der untere Ablaufbereich in eine Ablaufvorrichtung übergeht, an die ein wasserdurchlässiger Auffangbehälter für die selektierten Wassertiere anschließt, der in einem Rücklaufbecken angeordnet ist, aus dem die Pumpe über je eine Zulaufvorrichtung pro Wasserbehälter das Wasser in diese zurückpumpt, wobei die Zulaufvorrichtungen so angeordnet sind, dass in den Wasserbehältern, die eine konische Ausbildung mit vom oberen Bereich in Richtung unteren Bereich kleiner werdendem Durchmesser aufweisen, eine Kreiselströmung erzeugbar ist.

Bei der Erfindung weist jeder konische Wasserbehälter, die alle der Aufzucht von Wassertieren dienen, in seinem oberen Bereich (an der Oberkante der Wassersäule) eine Überlaufvorrichtung auf, wobei alle Überlaufvorrichtungen in zumindest einen zentralen Sammelbehälter münden. Dadurch ergibt sich bei der Erfindung eine besonders kompakte Anordnung der Wasserbehälter in der Aquakulturanlage. Die zu erntenden Wassertiere werden zentral in der Mitte der Anlage gesammelt und dann weitergeführt. Hierzu werden sie in einen Auffangbehälter geleitet, der seinerseits in einem zentralen Rücklaufbecken angeordnet ist. Der Auffangbehälter ist wasserdurchlässig, sodass das Wasser hindurchströmen kann, die Wassertiere aber zurückgehalten und entnommen werden können. An das Rücklaufbecken ist eine Pumpe angeschlossen, die das Wasser, nachdem es in einem Filtersystem gereinigt worden ist, über Zulaufvorrichtungen in die Wasserbehälter zurückpumpt. Es ergibt sich eine geschlossene Umlaufströmung (Recirculating Aquaculture System - RAS).

Für jeden Wasserbehälter bei der Erfindung ist eine Zulaufvorrichtung vorgesehen. Dabei ist diese so angeordnet, dass das einströmende Wasser in den konischen Wasserbehältern eine Kreiselströmung erzeugt. Hierbei handelt es sich um eine radial geschichtete Strömung um die vertikale Achse des Wasserbehälters herum (azimutale Strömung). Durch die konische Form der Wasserbehälter, bei der der Durchmesser in deren oberen Bereich größer ist als in deren unteren Bereich, wird die Kreiselströmung noch verstärkt und sehr harmonisch hergestellt. Es entstehen keine Strudel oder Strömungsabrisse, da die Wasserbehälter keine Ecken und Kanten aufweisen. Somit wird auch den mitgeführten Wassertieren kein Schaden zugefügt. Durch diese Strömung werden die zu selektierenden Wassertiere stressfrei in Richtung der Überlaufvorrichtungen in jedem Wasserbehälter transportiert und können so einfach und zuverlässig selektiert und in Alterskohorten aufgeteilt werden. Das natürliche Bestreben der Wassertiere, mit der Wasserströmung in Richtung auf den oberen Überlauf der Wasserbehälter zu schwimmen, unterstützt die Selektion noch. Dabei sorgt das erste Trenngitter mit einer vorgegebenen Maschenweite (es kann sich hierbei auch um ein einfaches Netz handeln) dafür, dass nur Wassertiere unterhalb der Maschenweite, also in der Regel Jungtiere, über die Überlaufvorrichtung selektiert werden. Die größeren Wassertiere, in der Regel erwachsene Tiere, verbleiben im Wasserbehälter. Dort sorgen sie für die Erzeugung der nächsten Generationen (Reproduktion). Eine derartige Alterskohortentrennung kann in einem an die Wachstumsgeschwindigkeit des aufzuziehenden Wassertieres angepassten Rhythmus durchgeführt werden. Ein Protokoll kann vorsehen, identisch unbesetzte Wasserbehälter mit den geernteten Jungtieren zu bestücken, in denen sie (in wöchentlichen Kohorten) zur Ernteoder Reproduktionsreife heranwachsen. Je nach Temperatur können die Tiere innerhalb von 6 bis 9 Wochen geschlechtsreif sein. Der Entezeitpunkt wird - je nach Bedarf - der Entwicklung der Tiere angepasst.

Die Kreiselströmung dient bei der Erfindung dazu, das Schwimmen der Wassertiere in Richtung der Überlaufvorrichtungen zu unterstützen. Dabei ist es unerheblich, ob die Kreiselströmung sich im Uhrzeigersinn oder ihm entgegen dreht. Es kann auch in allen Wasserbehältern eine gleichgerichtete Kreiselströmung erzeugt werden. Es ist aber auch möglich, in den Behältern unterschiedlich gerichtete Kreiselströmungen zu erzeugen, für den gewünschten Effekt ist das unerheblich. Um die Kreiselströmung in jedem Wasserbehälter zu erzeugen, sind verschiedene technische Umsetzungen möglich. Besonders einfach ist es jedoch, wenn gemäß einer ersten vorteilhaften und bevorzugten Ausgestaltung der Erfindung vorgesehen ist, dass jede Zulaufvorrichtung rohrförmig ausgebildet und am Rand des Wasserbehälters angeordnet ist und das Wasser tangential in den Wasserbehälter einleitet. Zur Erzeugung sind keine weiteren Strömungselemente, wie beispielsweise Klappen oder Ventile, im Wasserbehälter erforderlich. Durch das tangentiale, d.h. schräg einlaufende Wasser und die konische Ausbildung der Wasserbehälter wird zuverlässig eine harmonische Kreiselströmung erzeugt. Dabei wird die Stärke der Strömung durch die Stärke des einströmenden Wassers und den Konusgrad erzeugt. Je stärker das Wasser in den Randbereich des Wasserbehälters einfließt und je stärker sich der Wasserbehälter nach unten verjüngt, desto stärker wird die erzeugte Kreiselströmung. Für eine hohe Reproduktionsrate von Amphipoden ist nur eine relativ geringe Kreiselströmung erforderlich. Diese muss aber vorhanden sein, damit das Tierwohl garantiert ist.

Die meisten zu selektierenden Tiere werden mit der bei der Erfindung erzeugten Kreiselströmung in Richtung auf die Überlaufvorrichtungen in den einzelnen Wasserbehältern bewegt. Trotzdem gibt es immer noch einzelne Wassertiere, die sich an andere Stellen in den Wasserbehältern bewegen. Um auch diese Tiere einsammeln zu können, ist es gemäß einer nächsten Erfindungsausgestaltung bevorzugt und vorteilhaft, wenn jeder Wasserbehälter in seinem unteren Bereich eine Sedimentkammer mit einer mittels eines Ablasshahns verschließbare Ablauföffnung aufweist, die oberhalb des Rücklaufbeckens endet, wobei oberhalb der Sedimentkammer ein zweites Trenngitter mit vorgegebener Maschenweite angeordnet ist (es kann sich hierbei ebenfalls auch um ein einfaches Netz handeln). An diesem unteren Auslass können dann weitere Wassertiere, insbesondere eben Jungtiere mit einer Größe unterhalb der Maschenweite des zweiten Trenngitters, gezielt entnommen werden. Vor allem dient die Sedimentkammer am unteren Ende jedes Wasserbehälters aber der Entnahme von Fremdstoffen, die sich im Wasserbehälter abgelagert haben. Hierbei handelt es sich vor allem um Futterreste und Kotabfälle, die ansonsten das Wasser verschmutzen würden. Diese fallen durch das zweite Trenngitter, reichern sich in der Sedimentationskammer an und können von dort entsorgt werden.

Da aber trotzdem noch unerwünschte Partikel in das Wasser im Auffangbehälter gelangen können, ist es gemäß einer weiteren Erfindungsmodifikation vorteilhaft und bevorzugt, wenn in dem Rücklaufbecken vor der Pumpe ein Filtersystem angeordnet ist. Das Wasser, das von der Pumpe durch das Filtersystem in die Zulaufvorrichtungen der Wasserbehälter zurückgepumpt wird, ist damit ausreichend rein und unbeanstandet. Somit kann durch die Wasserrückführung und -filterung eine enorme Einsparung gegenüber einem Durchlaufbetrieb mit ständig neuem Wasser erreicht werden. Weiterhin wird die Wasserqualität natürlich verbessert, wenn sie angereichert wird. Zur Anreicherung mit Luft kann bei einer Erfindungsmodifikation insbesondere in jedem Wasserbehälter eine Luftzufuhreinrichtung vorgesehen sein. Hierbei kann es sich um ein einfaches Rohr handeln, dass im Wasser im Wasserbehälter endet und durch das Luft in das Wasser im Wasserbehälter eingeblasen wird. Weiterhin ist es sinnvoll, die Wasseroberflächen in den Wasserbehältern abzudecken, damit weder Fremdpartikel hinein noch Wassertiere hinausgelangen können. Somit ist es vorteilhaft, wenn in einer nächsten Erfindungsmodifikation vorgesehen ist, auf jedem Wasserbehälter eine obere Abdeckung, beispielsweise in Form eines einfachen Deckels, vorzusehen.

Damit sich die Wassertiere gut vermehren, ist es wichtig, ihnen ein Habitat zur Verfügung zu stellen, in dem sie sich auch wohlfühlen. Neben der richtigen Einstellung der Wasserparameter und der Futtermittel ist die Gestaltung des Inneren der Wasserbehälter, das sogenannte "Habitat" ausschlaggebend für eine gute Vermehrung der Wassertiere. Bei der Ausgestaltung des Habitats ist sehr individuell auf die jeweils zu vermehrende Wassertierart Rücksicht zu nehmen. Werden beispielsweise Krebstiere gezüchtet, so ist es vorteilhaft, als Habitat harte, zerklüftete, geschlitzte Untergründe anzubieten. Bei Amphipoden ist es bekannt, dass sie stark thigmotaktisch sind, d.h. sich an Hartstrukturen im Wasser orientieren. Das bedeutet auch, dass nicht das Wasservolumen, sondern die Oberfläche des Hartsubstrates entscheidend für das Tierwohl - und damit für die Reproduktion - ist. Bevorzugt und vorteilhaft ist bei der Erfindung daher vorgesehen, dass in jedem Wasserbehälter ein Kultivierungsturm für die Wassertiere angeordnet ist. Ein Kultivierungsturm bietet Schutz und Verstecke und vergrößert durch seinen vertikalen Aufbau die mögliche Besatzfläche im Wasserbehälter erheblich. Da die juvenilen Wassertiere entnommen und in neuen Kohorten großgezüchtet werden, dient der Kultivierungsturm vor allem dem Wachsen und Vermehren der adulten Wassertiere. Bevorzugt und vorteilhaft ist es weiterhin, wenn der Kultivierungsturm aus mehreren, übereinander angeordneten Substratsieben besteht, die gebogen ausgebildet sind, wobei zwischen den einzelnen Substratsieben Ringschlitze als Einschwimmöffnungen für die Wassertiere ausgebildet sind.

Mit einem derartigen Aufbau wird ein künstliches Habitat zur Verfügung gestellt, das der natürlichen Umgebung sehr ähnlich ist. Die Wassertiere können durch die umlaufenden Ringschlitze einfach in den Turm hinein- und wieder herausschwimmen und fühlen sich dabei gut geschützt. Die durchbrochene Oberfläche der Siebe ist gut geeignet, um eine Wasserdurchströmung des Kultivierungsturms zu erreichen. Eine noch bessere Durchströmung ergibt sich, wenn einer nächsten Erfindungsausgestaltung bevorzugt und vorteilhaft vorgesehen ist, dass der Kultivierungsturm aus mehreren, übereinander angeordneten Substratplatten besteht, die eben ausgebildet sind, wobei sich die Substratplatten durch ihre Oberflächenbeschaffenheit unterscheiden. Diese kann rau oder glatt oder zerklüftet oder auch anderweitig gestaltet sein. Auch der Abstand der einzelnen Substratplatten zueinander kann variieren, sodass sich unterschiedliche Spaltbreiten ergeben. Es ergibt sich ein schützender, aber doch rundum offener Kultivierungsturm, den die Wassertiere gerne annehmen. Jedes Individuum im Wasserbehälter kann sich dann nach seinen speziellen Vorlieben einen optimalen Ort zum Leben und Wachsen aussuchen. Diese Maßnahmen garantieren ein optimales Aufwachsen gesunder Wassertiere.

Desweiteren kann bei der Erfindung bevorzugt und vorteilhaft vorgesehen sein, dass in jedem Wasserbehälter ein herausnehmbarer Kollektor für junge Wassertiere angeordnet ist. Bei dem zuvor beschriebenen Kultivierungsturm aus Substratplatten kann der Kollektor beispielsweise ebenfalls als Platte ausgebildet sein und den oberen Abschluss des Kultivierungsturms bilden. Somit können die jungen Wassertiere noch über eine dritte Möglichkeit selektiert werden. Der Kollektor besteht bevorzugt aus einem Gewebe, in das nur kleine, junge Wassertiere einschwimmen können. Der Kollektor kann dann zusammen mit den Jungtieren entnommen und extern entladen werden. Somit ist bei der beanspruchten Aquakulturanlage zuverlässig gewährleistet, dass alle Jungtiere schonend selektiert werden. Durch die genannten Maßnahmen ist ein optimales Aufwachsen der Wassertiere erreicht. Diese kann noch unterstützt werden, wenn nach einer nächsten Erfindungsausgestaltung bevorzugt und vorteilhaft vorgesehen ist, dass kein Kunststoff auf der Basis von Polyvinylchlorid in der Anlage verbaut ist. Offensichtlich wirkt sich PVC negativ auf die Reproduktionsrate bestimmter Wassertiere aus.

Weiter oben wurde bereits ausgeführt, dass die landgestützte Aquakulturanlage nach der Erfindung besonders kompakt aufgebaut werden kann, da sich zumindest ein zentraler Sammelbehälter zwischen zumindest zwei Wasserbehältern befindet. Hier ist eine weitere Skalierung ohne weiteres möglich. Das System ist so konstruiert, dass es sich beliebig erweitern oder auch auf grö-ßere Maßstäbe übertragen lässt. Die Wasserbehälter (Zuchtbehälter) lassen sich je nach Platz beliebig horizontal und bis zu einer gewissen Höhe vertikal erweitern. Eine weitere Modifikation der Erfindung sieht daher bevorzugt und vorteilhaft vor, dass mehr als zwei Wasserbehälter horizontal und/oder vertikal und/oder radial in einem Gestell um den zumindest einen zentralen Sammelbehälter herum angeordnet sind. Dabei befindet sich der zumindest eine zentrale Sammelbehälter oberhalb des Wasserspiegels des Rücklaufbeckens. Vom Sammelbehälter kann es daher entweder in einen Auffangbehälter in einem Rücklaufbecken oder in mehrere Auffangbehälter in einem Rücklaufbecken oder in mehrere Auffangbehälter in mehreren Rücklaufbecken weitergehen. Der konstruktiven Ausgestaltung sind nur technische Grenzen gesetzt, gleiches gilt für die Ausgestaltung geeigneter Gestelle zur Halterung der einzelnen Komponenten. Die landgestützte Aquakulturanlage nach der Erfindung ist damit nahezu beliebig größenskalierbar, wobei die angeschlossene Wasseraufbereitung immer angepasst werden muss. Weitere Details zu diesen und anderen technischen Aspekten sind den Ausführungsbeispielen zu entnehmen.

Die erfindungsgemäße landgestützte Aquakulturanlage und ihre aufgezeigten Modifikationen eignen sich grundsätzlich für die Aufzucht von verschiedenen Wassertieren aus den Gattungen Fische, Krebstiere und Schalentiere, wobei diese nicht ortsfest sein dürfen. Dabei kann die Anlage sowohl im Innenbereich als auch im Außenbereich aufgestellt werden und benötigt aufgrund ihrer Kompaktheit nur relativ wenig Stellfläche. Bereits eingangs wurde auch erwähnt, dass Amphipoden, insbesondere Gammariden, sich besonders eignen als Futtermittel für andere Tiere, auch außerhalb einer Aquakulturzucht. Je nach erreichter Produktionsmenge können die Amphipoden als Trockenfutter an Futtermittelhersteller gehen oder - bei geringerer Produktion - als Lebendfutter an Fischzüchter, beispielsweise in der Aquaristik, die auf Lebendfutter fressende Fische spezialisiert sind. Derzeit gibt es noch keinen Markt für Amphipoden in der Futtermittelindustrie. Deshalb wird eine Anwendung einer landbasierten Aquakulturanlage nach einem der vorangehenden Ansprüche zur Produktion von Krebstieren, bevorzugt von Amphipoden, besonders bevorzugt von Gammariden, in künstlichem Seewasser besonders beansprucht. Durch die zuverlässige und reproduzierbare Parametrierbarkeit von künstlichem Seewasser können mit der landbasierten Aquakulturanlage nach der Erfindung besonders einfach und in gleichbleibend hoher Qualität und Menge Gammariden gezüchtet werden. Es besteht keine Abhängigkeit von frischem Seewasser.

### Ausführungsbeispiele

Die landbasierte Aquakulturanlage nach der Erfindung und ihre vorteilhaften Modifikationen werden anhand der schematischen, nicht maßstäblichen Figuren zum besseren Verständnis nachfolgend noch weitergehend erläutert. Im Einzelnen zeigt die
- **Fig. 1**: eine schematisch-perspektivische Ansicht eines Aufbaus mit zwei Wasserbehältern,
- **Fig. 2**: eine schematisch-transparente Ansicht eines Wasserbehälters im Detail mit einer ersten Ausführungsform eines Kultivierungsturms,
- **Fig. 3**: eine schematisch-transparente Ansicht eines Wasserbehälters im Detail mit einer zweiten Ausführungsform eines Kultivierungsturms und
- **Fig. 4A,4B**: schematisch-perspektivische Ansichten von hochskalierten Aquakulturanlagen.

In verschiedenen Studien am Alfred-Wegener-Institut (AWI) wurden ökologische Fragestellungen mit Hilfe von Tangflohkrebsen untersucht. Es wurden erstmals vergleichende ökologische Aspekte beider Arten bearbeitet und erste unterschiedliche Ansprüche der Arten an ihre Umwelt herausgestellt. Einen wichtigen Unterschied stellte die Ernährung beider Arten dar - während sich G. *locusta* omnivor ernährte, bevorzugte *E*. *marinus* vor allem Makroalgen als Nahrungsquelle. Die Hälterung und Reproduktion von *G. locusta* und *E*. *marinus* wurde in den Laboren der Biologischen Anstalt Helgoland entwickelt und war dabei so erfolgreich, dass die Tiere als Modell- und Futterorganismen für weitere Experimente verwendet wurden. Im Bereich der Aquakulturforschung wurden am AWI bereits mehrere Organismen der Nordsee auf ihr Potenzial (Protein-, Fett-, und Aschegehalt) als Futtermittel in der Aquakultur untersucht. In jüngsten Arbeiten am AWI wurde herausgefunden, dass die Zielarten, speziell *E*. *gammarus* und eine Schwesternart *Gammarus oceanicus,* in der Lage sind, aus Futter pflanzlichen Ursprungs mit geringem Nährwert (kaum oder keine ungesättigten Fettsäuren) selbst hochwertige essenzielle Fettsäuren ("Fischöle") zu synthetisieren ("trophic upgrading").

Die in Vorversuchen am AWI erzeugten hohen Populationsdichten von G. *locusta* und *E*. *marinus* wurden in einer halboffenen Meerwasseranlage der Biologischen Anstalt Helgoland erreicht. Dies soll jetzt mit der vorliegenden Erfindung in einer geschlossenen Rezirkulationsanlage (RAS)auf industrielle Dichten gesteigert werden. Möglichkeiten zur Ertragssteigerung liegen in der Manipulation der Umgebungsparameter (z.B. Temperatur, Licht), sowie der Komplexität des Habitats (z.B. durch Kompartimentierung). Da für einen wirtschaftlichen Aspekt nicht nur hohe Dichten, sondern auch günstigere Preise als für andere Futtermittel (speziell Fischmehl und Fischöl) erzielt werden sollen, wird insbesondere auf eine Futterverwertung der Tiere, die auf Rest- und Abfallströmen (oder anderen günstigen Quellen) basiert, getestet. Hierfür sollen ressourcenschonende Abfallströme (Faeces und andere anfallende Feststoffe) der hauseigenen Aquakulturanlage, günstige Abfälle aus der Pflanzenfutterherstellung (z.B. Lupinengrün oder Rapspellets) und natürliche Nahrungsquellen (Makroalgen aus Anschwemmungen, insbesondere *Ulva spp*.) zurückgegriffen werden, um einen möglichst hohen Ertrag an Fischölen zu erreichen. Gleichzeitig wird die Nutzbarkeit der Tangflohkrebse für verschiedene Fischarten als Futtermittelzusatz und Lebendfutter getestet. Die mit der Erfindung beanspruchte landbasierte Aquakulturanlage hat somit ein hohes Potenzial für die Tierfutterherstellung und kann auch zur Gewinnung von essenziellen Fettsäuren für den menschlichen Verzehr genutzt werden.

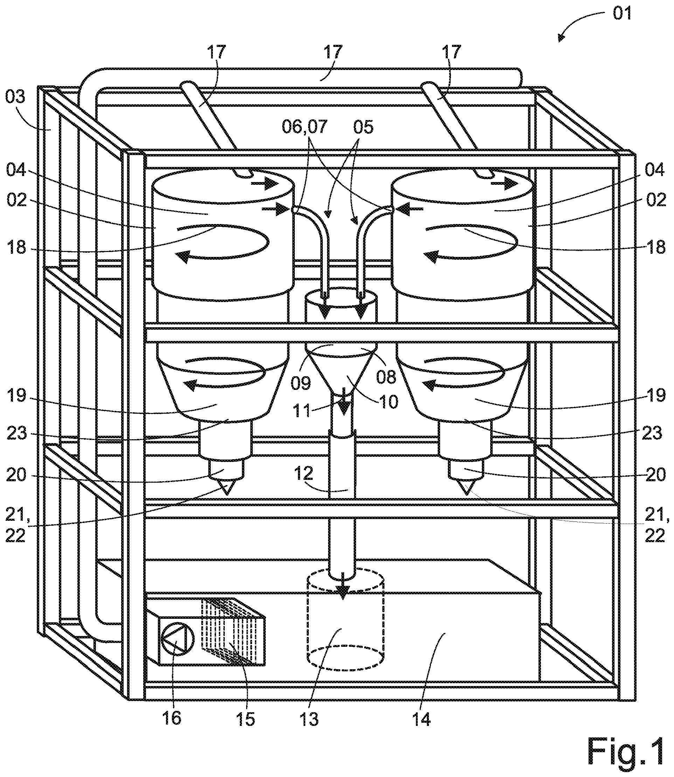

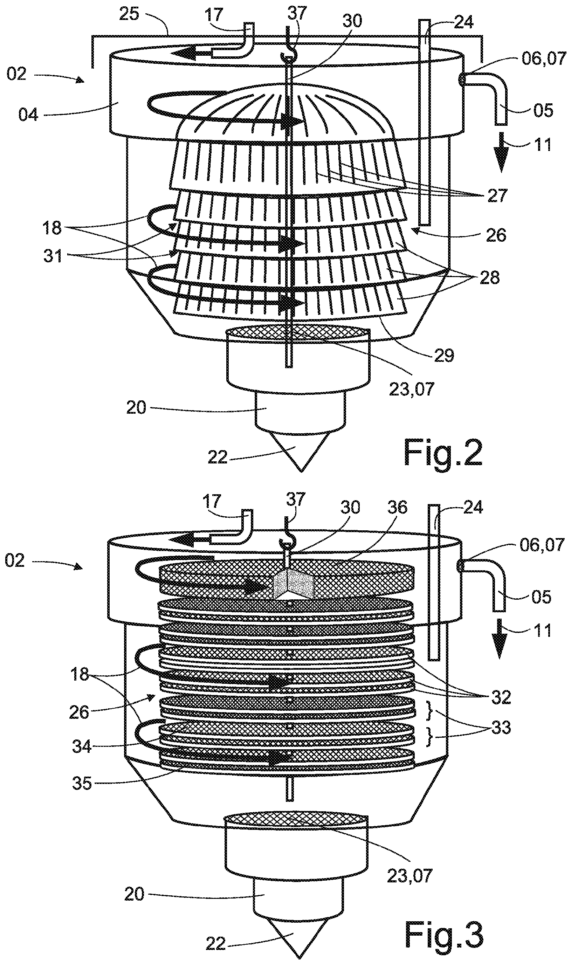

In der **Fig. 1** ist eine landbasierte Aquakulturanlage **01** nach der Erfindung zur Produktion von Krebstieren, bevorzugt von Amphipoden, besonders bevorzugt von Gammariden, in künstlichem Seewasser (mit entsprechenden Zusätzen versehenes Süßwasser) schematisch dargestellt. Zu erkennen sind zwei Wasserbehälter **02,** die in einem Gestell **03** angeordnet sind. Der linke Wasserbehälter **02** weist in seinem oberen Bereich **04** eine Überlaufvorrichtung **05** auf, die mit einem ersten Trenngitter **06** (vergleiche auch **Fig. 2**) ausgerüstet ist. Die Maschenweite **07** (vergleiche auch **Fig. 2**) des ersten Trenngitters **06** ist dabei so gewählt, dass nur Wassertiere unterhalb einer vorgegebenen Größe durch die Maschen gelangen können. Hierbei handelt es sich in der Regel um Jungtiere. Auch der rechte Wasserbehälter **02** weist in seinem oberen Bereich **04** eine Überlaufvorrichtung **05** auf. Diese ist ebenfalls mit einem ersten Trenngitter **06** abgedeckt. Somit können auch aus dem rechten Wasserbehälter **02** Jungtiere entweichen (Pfeile **11).** Die Überlaufvorrichtung **05** ist im gezeigten Ausführungsbeispiel als gekrümmtes Rohr ausgebildet. Die Wasserbehälter **02** sind als konische Kunststoffbehälter mit einem Volumen von ungefähr 60 l ausgebildet. Andere Materialien und Volumina sind ohne weiteres einsetzbar. Dabei kommt aber kein PVC (Polvinylchlorid) zum Einsatz, da hierdurch das Wachstum der Wassertiere gehemmt werden kann. Bei der konischen Ausbildung verengen sich die Wasserbehälter **02** nach unten hin, was die Erzeugung einer Kreiselströmung **18** (siehe unten) unterstützt. Im gezeigten Ausführungsbeispiel verläuft der Konus nicht durchgängig kontinuierlich, sondern in Stufen und Schrägen.

Zwischen den beiden Wasserbehältern **02** ist ein zentraler Sammelbehälter **08** angeordnet, der einen oberen Zulaufbereich **09** und einen unteren Ablaufbereich **10** aufweist. Im gezeigten Ausführungsbeispiel hat der obere Zulaufbereich **09** einen größeren Querschnitt als der untere Ablaufbereich **10,** sodass der zentrale Sammelbehälter **08** nach unten trichterförmig zuläuft. In den oberen Zulaufbereich **09** münden die Überlaufvorrichtungen **05** von den Wasserbehältern **02,** sodass die aus den Wasserbehältern **02** ausgeschwemmten Jungtiere zusammen mit dem Wasser in den zentralen Sammelbehälter **08** gelangen. An den unteren Ablaufbereich **10** des zentralen Sammelbehälters **08** schließt eine Ablaufvorrichtung **12** an, die in einen Auffangbehälter **13** mündet. Die Ablaufvorrichtung **12** ist im gezeigten Ausführungsbeispiel einfach rohrförmig ausgebildet. Der Auffangbehälter **13** ist wasserdurchlässig (Strichlierung) und in einem Rücklaufbecken **14,** in dem sich das abfließende Wasser aus den Wasserbehältern **02** sammelt, angeordnet. Im wasserdurchlässigen Auffangbehälter **13** werden die aus den Wasserbehältern **02** selektierten Wassertiere gesammelt. Da sie sich weiterhin im Wasser (des Rücklaufbeckens **14**) befinden, können sie hier auch kurze Zeit zwischengelagert werden. Ansonsten werden sie zur weiteren Verwendung aus oder zusammen mit dem Auffangbehälter **13** entnommen.

Das Wasser aus dem Rücklaufbecken **14** wird in einem Filtersystem **15** gereinigt und belüftet und mittels einer Pumpe **16** über Zulaufvorrichtungen **17** in die Wasserbehälter **02** zurückgepumpt. Durch die Belüftung im Filtersystem **15** wird ein gleichmäßiger und hoher Sauerstoffgehalt im gesamten, umlaufenden Anlagenwasser erreicht. Es ergibt sich ein Zirkulationssystem (RAS) mit einer geschlossenen Umlaufströmung. Dabei sind die Zulaufvorrichtungen **17** im gezeigten Ausführungsbeispiel als gerade, aber schräg verlaufende Rohre ausgebildet. Sie lassen das Wasser so in die Wasserbehälter **02** zurück, dass sich in jedem Wasserbehälter **02** eine Kreiselströmung **18** ausbildet. Dazu wird der ausfließende Wasserstrahl auf die Wasseroberfläche am Rand der Wasserbehälter **02** gerichtet (tangentiale Wassereinleitung). Diese Kreiselströmung **18** befördert die zu selektierenden Wassertiere zusätzlich zu ihrer eigenen Intention in den oberen Bereich **04** der Wasserbehälter **02** zu den Überlaufvorrichtungen **05** und von dort in den zentralen Sammelbehälter **08**.

Jeder Wasserbehälter **02** weist in seinem unteren Bereich **19** noch eine Sedimentkammer **20** auf. Diese verfügt über eine Ablauföffnung **21**, die mittels eines Ablasshahns **22** verschließ- und öffenbar ist. Gesammeltes Sediment kann so komplett einfach aus dem System entfernt oder in das Rücklaufbecken **14** mit seinem Filtersystem **15** eingelassen werden. Vor der Sedimentkammer **20** befindet sich noch ein zweites Trenngitter **23** (vergleiche **Fig. 02**) mit vorgegebener Maschenweite **07**. Diese kann der Maschenweite **07** des ersten Trenngitters **06** entsprechen, sodass auch durch das zweite Trenngitter **23** nur Jungtiere entweichen können. Solche Jungtiere, die sich nicht in der Kreiselströmung **18** in Richtung der oberen Überlaufvorrichtung **05** (Mehrheit) in den Wasserbehältern **02,** sondern in den unteren Bereich **19** (Minderheit) orientiert haben, können hier zusätzlich entnommen werden.

In der **Fig. 2** ist ein Wasserbehälter **02** im Detail und halbtransparent dargestellt. Zu erkennen ist die Überlaufvorrichtung **05** (gleichzeitig natürlich auch Ablaufvorrichtung) im oberen Bereich **04** des Wasserbehälters **02**. Vor der Überlaufvorrichtung **05** ist das erste Trenngitter **06** mit der Maschenweite **07** angeordnet. Die Zulaufvorrichtung **17** ist in ihrem Endbereich und in diesem Ausführungsbeispiel als gekrümmtes Rohr dargestellt. Es wird gezeigt, wie die gekrümmte Zulaufvorrichtung **17** das Wasser tangential gegen den Rand des Wasserbehälters **02** einlässt und die Kreiselströmung **18** im Wasserbehälter **02** erzeugt. Zusätzlich ist aufgezeigt, dass in jeden Wasserbehälter **02** eine Luftzufuhreinrichtung **24** endet. Diese sorgt für eine gute Sauerstoffzufuhr im Wasser in den Wasserbehältern **02**. Jeder Wasserbehälter **02** trägt außerdem eine obere Abdeckung **25,** die das Wasser vor Verunreinigungen und Störungen schützt. Die Abdeckung **25** ist abnehmbar, sodass das Innere des Wasserbehälters **02** für Inspektions- und Wartungsarbeiten und alle anderen erforderlichen Maßnahmen einfach einsichtig und zugänglich ist. Weiterhin ist im unteren Bereich **19** des Wasserbehälters **02** gut die Sedimentkammer **20** mit dem Ablasshahn **22** und dem zweiten Trenngitter **23** mit der Maschenweite **07** zu erkennen.

Im Inneren jedes Wasserbehälters **02** ist ein Kultivierungsturm **26** als Habitat für die zu züchtenden Wassertiere, bevorzugt Amphipoden, angeordnet. In den Gezeigten Ausführungsbeispielen ist er mittels eines Hakens **37** an der zentralen Achse **30** von oben in den Wasserbehälter **02** eingehängt (und kann beispielsweise am Deckel **25** von Innen befestigt sein). Insbesondere Krebstiere bevorzugen harte Böden mit Schlitzen **27**, Winkeln und Nischen. Der gezeigte Kultivierungsturm **26** besteht aus mehreren Substratsieben **28**, die übereinandergestapelt sind. Dabei sind die Substratsiebe **28** gebogen, hier topfförmig gekrümmt, von ihrer Unterseite **29** her offen und an einer zentralen Achse **30** miteinander verbunden. Sie bilden Ringschlitze **31**, durch die die Wassertiere gut ein- und ausschwimmen können. Durch die Schlitze **27** (oder anderweitig gestaltete Sieböffnungen) ist eine gute Wasserzirkulationsgewährleistet.

In der **Fig. 3** ist eine alternative Ausführungsform des Kultivierungsturms **26** in schematischer, halbtransparenter Darstellung des Wasserbehälters **02** dargestellt. Der dargestellte Kultivierungsturm **26** besteht aus mehreren, übereinander angeordneten Substratplatten **32**, die eben ausgebildet sind. Jede oder mehrere Substratplatten **32** haben eine andere Oberflächenbeschaffenheit. So können sich die Wassertiere je nach ihrer Vorliebe bevorzugt ansiedeln. In allen Substratplatten **32** ist kein PVC verbaut (ebenso wie in der gesamten Anlage), da dieses das Wachstum der Wassertiere hemmt. Im gezeigten Ausführungsbeispiel besteht der Kultivierungsturm **26** für adulte Gammariden aus Substratplatten **32** mit einer Dicke von einschließlich 2 mm bis 5 mm, die in Plattenpaaren **33** entlang der zentralen Achse **30** angeordnet sind. Zwischen den gepaarten Substratplatten **32** besteht ein Abstand von kleiner oder gleich 5mm, der Abstand zwischen jeweils Plattenpaaren **33** beträgt zwischen einschließlich 10mm und 30mm. Dadurch sind eine gute Belüftung und ein guter Wasseraustausch im Kultivierungsturm **26** gewährleistet. Die Plattenpaare **33** werden aus zwei verschiedenen Typen von Substratplatten **32** zusammengesetzt (zwei gleiche oder zwei verschiedene Typen von Substratplatten **32** in einem Plattenpaar **33**). Bei der einen Substratplatte **32** handelt es sich um eine massive Lochplatte **34** (Durchmesser Löcher 5mm, Abstand der Löcher zwischen 5mm und 20 mm), bei der anderen Substratplatte **32** um einen mit einem Polyethylennetz bespannten Rahmen **35** (Maschenweite zwischen einschließlich 3mm bis 5mm). So finden alle Wassertiere den ihren Bedürfnissen optimal angepassten Lebensraum. Der Kultivierungsturm **26** wird so in den Wasserbehälters **02** eingesetzt, dass zur Wand ein Abstand von größer oder gleich 4,5 cm besteht und der Kultivierungsturm **26** frei in der Wassersäule steht, insbesondere hängt er an der Achse **30** im Wasserbehälter **02** und setzt nicht auf dessen Boden auf, um die erzeugte Kreiselströmung **18** und damit die gleichmäßige Belüftung des Wassers zu gewährleisten.

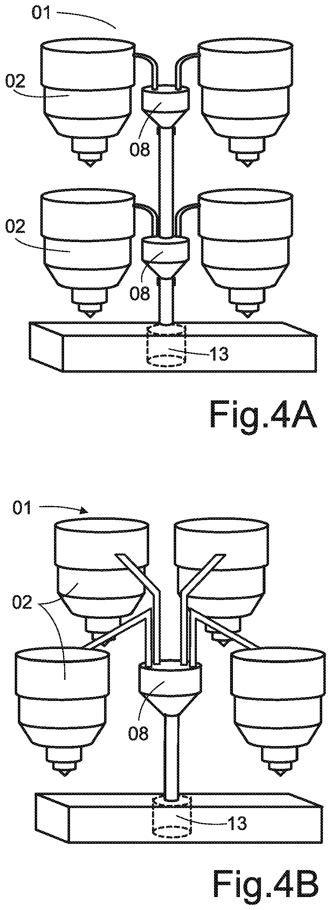

Um dem Kultivierungstank **26** zusätzlich zu den bereits vorgesehen Maßnahmen optional noch weitere Jungtiere entnehmen zu können, ist oberhalb der Plattenpaare **33** ein zusätzlicher Kollektor **36** an der Achse **30** angebracht. Der Kollektor **36** hat den gleichen oder einen kleineren Durchmesser als die darunterliegenden Substratplatten **32** des Kultivierungsturms **26**. Er besteht aus einem stabilen Polyethylen-Gewebe (in der **Fig. 4** schematisch in einem Tortenausschnitt dargestellt) mit einer Maschenweite zwischen einschließlich 4mm bis 7mm und weist eine Dicke von mindestens 20 mm auf. Der Kollektor **36** ist innen mit schwammartiger, sich langsam zersetzender Naturfaser gefüllt, vorzugsweise Luffa-Schwamm oder echter Schwamm. Die Jungtiere setzen sich überwiegend in das feine Gewebe, während adulte Tiere nicht hineinkommen. So können die Jungtiere dem Wasserbehälter **02** zusammen mit dem Kollektor **36** entnommen werden. Zur Erntung der Jungtiere wird der Kollektor **36** separat mit Süßwasser gespült. Um übermäßige Bakterien- oder Schimmelpilz-Belastungen zu vermeiden, ist der Kollektor **36** entweder regelmäßig zu erneuern oder gründlich zu reinigen.

In den **Fig. 4A, 4B** sind weitere Anordnungsmöglichkeiten für die Wasserbehälter **02** in der Aquakulturanlage **01** dargestellt. Die **Fig. 3A** zeigt eine Anordnung von mehreren Wasserbehältern **02** und zentralen Sammelbehältern **08** übereinander, die in einen Auffangbehälter **13** führen. Die **Fig. 3B** zeigt eine radiale Anordnung von mehreren Wasserbehältern **02**. Auch hier sind Anordnungen mit mehreren zentralen Sammelbehältern **08** möglich. Die tragenden Gestelle wurden für eine bessere Übersicht nicht dargestellt.

Die mit der Erfindung beanspruchte landbasierte Aquakulturanlage mit ihren aufgezeigten Modifikationen bringt zusammenfassend folgende Vorteile mit sich:
- hohes Tierwohl - für ein gesundes Wachstum von Amphipoden ist eine geringe Wasserströmung vonnöten und garantiert gute Reproduktionsraten,
- gute Feststoffseparation - anfallende Feststoffe (Faeces und Futterreste) werden einfach absedimentiert und können durch einen unterhalb angebrachten Ablasshahn entfernt werden und
- gute Belüftung - das im Filter mit Sauerstoff angereicherte Wasser wird über die gesamte Wassersäule verteilt und gewährleistet eine gleichmäßige Sauerstoffversorgung.

### Bezugszeichenliste

- **01**: Aquakulturanlage
- **02**: Wasserbehälter
- **03**: Gestell
- **04**: oberen Bereich von 02
- **05**: Überlaufvorrichtung
- **06**: erstes Trenngitter
- **07**: Maschenweite
- **08**: zentraler Sammelbehälter
- **09**: oberer Zulaufbereich von 08
- **10**: unterer Ablaufbereich von 08
- **11**: Pfeile Jungtierentnahme
- **12**: Ablaufvorrichtung
- **13**: Auffangbehälter
- **14**: Rücklaufbecken
- **15**: Filtersystem
- **16**: Pumpe
- **17**: Zulaufvorrichtung
- **18**: Kreiselströmung
- **19**: unterer Bereich von 02
- **20**: Sedimentkammer
- **21**: Ablauföffnung
- **22**: Ablasshahn
- **23**: zweites Trenngitter
- **24**: Luftzufuhreinrichtung
- **25**: Abdeckung
- **26**: Kultivierungsturm
- **27**: Schlitz
- **28**: Substratsieb
- **29**: Unterseite von 28
- **30**: Achse
- **31**: Ringschlitz
- **32**: Substratplatte
- **33**: Plattenpaar aus 32
- **34**: Lochplatte als 32
- **35**: Rahmen als 32
- **36**: Kollektor
- **37**: Haken

## Patentansprüche

1. Landbasierte Aquakulturanlage (01) zur Produktion von Wassertieren mit zumindest zwei Wasserbehältern (02), von denen zumindest einer eine Überlaufvorrichtung (05) mit einem ersten Trenngitter (06) mit vorgegebener Maschenweite (07) aufweist, wobei mittels zumindest einer Pumpe (16) über zumindest eine Zulaufvorrichtung (17) in den Wasserbehälter (02) mit der Überlaufvorrichtung (05) eine geschlossene Umlaufströmung in den Wasserbehältern (02) erzeugbar ist und über die Überlaufvorrichtung (05) Wassertiere mit einer unterhalb der Maschenweite (07) liegenden Größe selektierbar sind, **dadurch gekennzeichnet, dass**
zumindest auch der zweite Wasserbehälter (02) eine Überlaufvorrichtung (05) aufweist, wobei jede Überlaufvorrichtung (05) im oberen Bereich (04) des jeweiligen Wasserbehälters (02) angeordnet ist, und zwischen den zumindest beiden Wasserbehältern (02) zumindest ein zentraler Sammelbehälter (08) mit einem oberen Zulaufbereich (09) und einem unteren Ablaufbereich (10) angeordnet ist, wobei in den oberen Zulaufbereich (09) die Überlaufvorrichtungen (05) der zumindest beiden Wasserbehälter (02) münden und der untere Ablaufbereich (10) in eine Ablaufvorrichtung (12) übergeht, an die ein wasserdurchlässiger Auffangbehälter (13) für die selektierten Wassertiere anschließt, der in einem Rücklaufbecken (14) angeordnet ist, aus dem die Pumpe (16) über je eine Zulaufvorrichtung (17) pro Wasserbehälter (02) das Wasser in diese zurückpumpt, wobei die Zulaufvorrichtungen (17) so angeordnet sind, dass in den Wasserbehältern (02), die eine konische Ausbildung mit vom oberen Bereich (04) in Richtung unteren Bereich (19) kleiner werdendem Durchmesser aufweisen, eine Kreiselströmung (18) erzeugbar ist.

2. Landbasierte Aquakulturanlage (01) nach Anspruch 1, **dadurch gekennzeichnet, dass**
jede Zulaufvorrichtung (17) rohrförmig ausgebildet ist, wobei die Zulaufvorrichtung (17) am Rand des Wasserbehälters (02) angeordnet ist und das Wasser tangential in den Wasserbehälter (02) einleitet.

3. Landbasierte Aquakulturanlage (01) nach Anspruch 1 oder 2, **dadurch gekennzeichnet, dass**
jeder Wasserbehälter (02) in seinem unteren Bereich (19) eine Sedimentkammer (20) mit einer mittels eines Ablasshahns (22) verschließbare Ablauföffnung (21) aufweist, die oberhalb des Rücklaufbeckens (14) endet, wobei oberhalb der Sedimentkammer (20) ein zweites Trenngitter (23) mit vorgegebener Maschenweite (07) angeordnet ist.

4. Landbasierte Aquakulturanlage (01) nach einem der vorangehenden Ansprüche, **dadurch gekennzeichnet, dass**
in dem Rücklaufbecken (14) vor der Pumpe (16) ein Filtersystem (15) angeordnet ist.

5. Landbasierte Aquakulturanlage (01) nach einem der vorangehenden Ansprüche, **dadurch gekennzeichnet, dass**
in jeden Wasserbehälter (02) eine Luftzufuhreinrichtung (24) endet.

6. Landbasierte Aquakulturanlage (01) nach einem der vorangehenden Ansprüche, **dadurch gekennzeichnet, dass**
auf jedem Wasserbehälter (02) eine obere Abdeckung (25) angeordnet ist.

7. Landbasierte Aquakulturanlage (01) nach einem der vorangehenden Ansprüche, **dadurch gekennzeichnet, dass**
in jedem Wasserbehälter (02) ein Kultivierungsturm (26) für die Wassertiere angeordnet ist.

8. Landbasierte Aquakulturanlage (01) nach Anspruch 7, **dadurch gekennzeichnet, dass**
der Kultivierungsturm (26) aus mehreren, übereinander angeordneten Substratsieben (28) besteht, die gebogen ausgebildet sind, wobei zwischen den einzelnen Substratsieben (28) Ringschlitze (31) als Einschwimmöffnungen ausgebildet sind.

9. Landbasierte Aquakulturanlage (01) nach Anspruch 7, **dadurch gekennzeichnet, dass**
der Kultivierungsturm (26) aus mehreren, übereinander angeordneten Substratplatten (32) besteht, die eben ausgebildet sind, wobei sich die Substratplatten (32) durch ihre Oberflächenbeschaffenheit unterscheiden.

10. Landbasierte Aquakulturanlage (01) nach einem der vorangehenden Ansprüche, **dadurch gekennzeichnet, dass**
in jedem Wasserbehälter (02) ein herausnehmbarer Kollektor (36) für junge Wassertiere angeordnet ist.

11. Landbasierte Aquakulturanlage (01) nach einem der vorangehenden Ansprüche, **dadurch gekennzeichnet, dass**
kein Kunststoff auf der Basis von Polyvinylchlorid in der Anlage (01) verbaut ist.

12. Landbasierte Aquakulturanlage (01) nach einem der vorangehenden Ansprüche, **dadurch gekennzeichnet, dass**
mehr als zwei Wasserbehälter (02) horizontal und/oder vertikal und/oder radial in einem Gestell (03) um den zumindest einen zentralen Sammelbehälter (08) herum angeordnet sind.

13. Anwendung einer landbasierten Aquakulturanlage (01) nach einem der vorangehenden Ansprüche zur Produktion von Krebstieren, bevorzugt von Amphipoden, besonders bevorzugt von Gammariden, in künstlichem Seewasser.

## Claims

1. A land-based aquaculture facility (01) for the production of aquatic animals with at least two water containers (02), of which at least one has an overflow device (05) with a first partition screen (06) that has a predefined mesh width (07), wherein a closed circular flow can be produced in the water containers (02) by means of at least one pump (16) via at least one supply line device (17) into the water container (02) with the overflow device (05) and aquatic animals with a size smaller than the mesh width (07) can be selected by means of the overflow device (05), **characterized in that**
at least the second water container (02) also has an overflow device (05), wherein each overflow device (05) is arranged in the upper region (04) of the respective water container (02) and at least one central collecting container (08) with an upper supply region (09) and a lower discharge region (10) is arranged between the at least two water containers (02), wherein the overflow devices (05) of the at least two water containers (02) lead into the upper supply region (09) and the lower discharge region (10) transforms into a discharge device (12), to which a water-permeable receiving container (13) for the selected aquatic animals is connected, wherein said receiving container is arranged in a return flow tank (14), from which the pump (16) pumps the water back into the water containers via a respective supply line device (17) per water container (02), and wherein the supply line devices (17) are arranged in such a way that a circular flow (18) can be generated in the water containers (02), which have a conical design with a diameter that decreases from the upper region (04) in the direction of the lower region (19).

2. The land-based aquaculture facility (01) according to claim 1, **characterized in that**
each supply line device (17) is designed in a tubular manner, wherein the supply line device (17) is arranged on the edge of the water container (02) and introduces the water into the water container (02) tangentially.

3. The land-based aquaculture facility (01) according to claim 1 or 2, **characterized in that**
each water container (02) has in its lower region (19) a sediment chamber (20) with a discharge opening (21), which can be closed by means of a discharge cock (22) and ends above the return flow tank (14), wherein a second partition screen (23) with predefined mesh width (07) is arranged above the sediment chamber (20).

4. The land-based aquaculture facility (01) according to one of the preceding claims, **characterized in that**
a filter system (15) is arranged in the return flow tank (14) in front of the pump (16).

5. The land-based aquaculture facility (01) according to one of the preceding claims, **characterized in that**
an air supply device (24) ends in each water container (02).

6. The land-based aquaculture facility (01) according to one of the preceding claims, **characterized in that**
an upper cover (25) is arranged on each water container (02).

7. The land-based aquaculture facility (01) according to one of the preceding claims, **characterized in that**
a cultivation tower (26) for the aquatic animals is arranged in each water container (02).

8. The land-based aquaculture facility (01) according to claim 7, **characterized in that**
the cultivation tower (26) consists of multiple substrate screens (28), which are arranged on top of one another and designed in a bent manner, wherein swim-in openings in the form of annular slots (31) are formed between the individual substrate screens (28).

9. The land-based aquaculture facility (01) according to claim 7, **characterized in that**
the cultivation tower (26) consists of multiple substrate plates (32), which are arranged on top of one another and designed in a plane manner, wherein the substrate plates (32) differ with respect to their surface finish.

10. The land-based aquaculture facility (01) according to one of the preceding claims, **characterized in that**
a removable collector (36) for young aquatic animals is arranged in each water container (02).

11. The land-based aquaculture facility (01) according to one of the preceding claims, **characterized in that**
no plastic on the basis of polyvinyl chloride is installed in the facility (01).

12. The land-based aquaculture facility (01) according to one of the preceding claims, **characterized in that**
more than two water containers (02) are arranged horizontally and/or vertically and/or radially in a frame (03) around the at least one central collecting container (08).

13. The use of a land-based aquaculture facility (01) according to one of the preceding claims for the production of crustaceans, preferably amphipods, particularly gammaridea, in artificial seawater.

## Revendications

1. Installation d'aquaculture terrestre (01) pour la production d'animaux aquatiques, pourvue d'au moins deux réservoirs d'eau (02), dont au moins l'un comporte un dispositif de trop-plein (05) doté d'une première grille de séparation (06) avec un maillage (07) prédéfini, au moyen d'au moins une pompe (16), par l'intermédiaire d'au moins un dispositif d'admission (17) dans le réservoir d'eau (02), un courant de circulation fermé pouvant être généré dans les réservoirs d'eau (02) à l'aide du dispositif de trop-plein (05), et par l'intermédiaire du dispositif de trop-plein (05), des animaux aquatiques étant sélectionnables selon une taille située en-dessous du maillage (07), **caractérisée**
**en ce qu'**au moins aussi le deuxième réservoir d'eau (02) comporte un dispositif de trop-plein (05), chaque dispositif de trop-plein (05) étant placé dans la zone (04) supérieure du réservoir d'eau (02) concerné, et entre les au moins deux réservoirs d'eau (02) étant placé au moins un réservoir collecteur (08) central, pourvu d'une zone d'arrivée (09) supérieure et d'une zone d'évacuation (10) inférieure, dans la zone d'arrivée (09) supérieure débouchant les dispositifs de trop-plein (05) des au moins deux réservoirs d'eau (02) et la zone d'évacuation (10) inférieure passant dans un dispositif d'évacuation (12) sur lequel se raccorde un réservoir de récupération (13) perméable à l'eau pour les animaux aquatiques sélectionnés, qui est placé dans une cuve de recyclage (14) à partir de laquelle, par l'intermédiaire de chaque fois un dispositif d'admission (17) par réservoir d'eau (02), la pompe (16) pompe l'eau en retour dans celle-ci, les dispositifs d'admission (17) étant placés de telle sorte qu'un courant giratoire (18) puisse être généré dans les réservoirs d'eau (02), qui présentent une configuration conique, avec un diamètre se rétrécissant de la zone (04) supérieure en direction de la zone (19) inférieure.

2. Installation d'aquaculture terrestre (01) selon la revendication 1, **caractérisée en ce que**
chaque dispositif d'admission (17) est conçu de forme tubulaire, le dispositif d'admission (17) étant placé sur le bord du réservoir d'eau (02) et introduisant l'eau de manière tangentielle dans le réservoir d'eau (02).

3. Installation d'aquaculture terrestre (01) selon la revendication 1 ou 2, **caractérisée en ce que**
chaque réservoir d'eau (02) comporte dans sa zone (19) inférieure une chambre de sédimentation (20) pourvue d'une ouverture d'écoulement (21) susceptible d'être fermée au moyen d'un robinet de vidange (22), qui se termine au-dessus de la cuve de recyclage (14), au-dessus de la chambre de sédimentation (20) étant placée une deuxième grille de séparation (23) d'un maillage (07) prédéfini.

4. Installation d'aquaculture terrestre (01) selon l'une quelconque des revendications précédentes, **caractérisée en ce que**
dans la cuve de recyclage (14), à l'avant de la pompe (16) est placé un système de filtration (15) .

5. Installation d'aquaculture terrestre (01) selon l'une quelconque des revendications précédentes, **caractérisée en ce que**
dans chaque réservoir d'eau (02) se termine un système d'apport d'air (24).

6. Installation d'aquaculture terrestre (01) selon l'une quelconque des revendications précédentes, **caractérisée en ce que**
sur chaque réservoir d'eau (02) est placé un recouvrement (25) supérieur.

7. Installation d'aquaculture terrestre (01) selon l'une quelconque des revendications précédentes, **caractérisée en ce que**
dans chaque réservoir d'eau (02) est placé une tour de culture (26) pour les animaux aquatiques.

8. Installation d'aquaculture terrestre (01) selon la revendication 7, **caractérisée en ce que**
la tour ce culture (26) est constituée de plusieurs tamis à substrats (28) placés en superposition, qui sont conçus de forme recourbée, entre les tamis à substrats (28) individuels, des fentes annulaires (31) étant conçues en tant que qu'ouvertures d'entrée en flottaison.

9. Installation d'aquaculture terrestre (01) selon la revendication 7, **caractérisée en ce que**
la tour de culture (26) est constituée de plaques à substrats (32) placées en superposition, qui sont conçues de forme plane, les plaques à substrats (32) se différenciant par leurs caractéristiques superficielles.

10. Installation d'aquaculture terrestre (01) selon l'une quelconque des revendications précédentes, **caractérisée en ce que**
dans chaque réservoir d'eau (02) est placé un collecteur (36) amovible pour de jeunes animaux aquatiques.

11. Installation d'aquaculture terrestre (01) selon l'une quelconque des revendications précédentes, **caractérisée en ce qu'**
aucune matière plastique à base de polychlorure de vinyle n'est intégrée dans l'installation (01).

12. Installation d'aquaculture terrestre (01) selon l'une quelconque des revendications précédentes, **caractérisée en ce que**
plus de deux réservoirs d'eau (02) sont placés à l'horizontale et / ou à la verticale et / ou en direction radiale dans une armature (03) autour de l'au moins un réservoir collecteur (08) central.

13. Utilisation d'une installation d'aquaculture terrestre (01) selon l'une quelconque des revendications précédentes pour la production de crustacés, de préférence d'amphipodes, de manière particulièrement préférentielle de gammares, dans de l'eau de mer artificielle.
